(19) **Europäisches Patentamt**
**European Patent Office**
**Office européen des brevets**

(11) **EP 4 152 128 B1**

(12) **EUROPEAN PATENT SPECIFICATION**

(45) Date of publication and mention
of the grant of the patent:
**03.01.2024 Bulletin 2024/01**

(21) Application number: **21197308.6**

(22) Date of filing: **17.09.2021**

(51) International Patent Classification (IPC):
***G06F 3/041*** *(2006.01)*

(52) Cooperative Patent Classification (CPC):
**G06F 3/0418**

(54) **CONTROL UNIT FOR IMPROVING A USER TOUCH CONTROL, METHOD AND COMPUTER PROGRAM**

STEUEREINHEIT ZUR VERBESSERUNG DER BENUTZERBERÜHRUNGSSTEUERUNG, VERFAHREN UND COMPUTERPROGRAMM

UNITÉ DE COMMANDE POUR AMÉLIORER LA COMMANDE TACTILE D'UN UTILISATEUR, PROCÉDÉ ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.03.2023 Bulletin 2023/12**

(73) Proprietor: **Bayerische Motoren Werke Aktiengesellschaft**
**80809 München (DE)**

(72) Inventor: **Zaki, Tarek**
**81829 München (DE)**

(56) References cited:
**EP-A1- 3 663 897**          **JP-A- S 647 126**
**US-A1- 2014 292 665**     **US-A1- 2017 277 332**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

## Description

## Field

The present disclosure relates to the field of touchscreens. Embodiments relate to a control unit for improving a user touch control, a method and a computer program.

## Background

For example, an in-vehicle rear-seat entertainment (RSE) system enables a rear-seat passenger to enjoy his ride by watching and interacting with multimedia content, such as movies, apps, etc. The RSE system can be realized by mounting a display to the backside of the front seat. Such mounted displays are commonly used, either provided by the vehicle-manufacturer or by attaching an own-tablet on a mechanical holder. This consumes a lot of unnecessary space due to the protruding display construction.

EP 3 663 897 A1 discloses an information input device including a display device, a touch detection device, a protective layer, a detector, a storage device, and a corrector. The storage device is a storage unit that holds in advance the distance information d of a plurality of points between the touch surface and the display surface as a distance map. The corrector corrections the touch coordinates P detected by the touch detection device to the touch coordinates P' based on the information of the viewpoint (face/eye position) of the operator acquired by the detector and the distance information d from the storage device.

US 2017/277332 A1 discloses a display console having an image plane and a touch plane. The touch plane is spaced a separation distance from the image plane. A controller is programmed to obtain a correction matrix such that each of the first plurality of pixels is translated in the x-y plane by off-set values. The off-set values are based at least partially on the separation distance, a viewing reference vector between the origin and a first eye reference point of the first user, a first angle and a second angle.

JP S64 7126 A discloses a method to accurately detect a touch position by detecting the angle of arrangement between a transmission touch panel and the screen of display device by an angle detecting means and correcting the touch position, which a position detecting means detects, in accordance with the detected angle by a position correcting means.

US 2014/292665 A1 discloses a control system enabling control of vehicle and in-vehicle system functionality via gesture recognition. The control system determines what functionality a user wishes to control by tracking the user's gaze to identify a selected function or function set. In combination with identifying the selected function and function set, one or more sensors installed in the vehicle detect one or more user gestures initiated by a user to interact with and/or control the selected function/function set.

An alternative is the integration of a RSE system display inside the seat behind a cover glass. However, the cover glass prevents the user from directly touching the RSE system display, which may decrease a user experience. This issue may appear with any entertainment/infotainment system comprising a display arranged behind a cover glass, e.g., in an airplane. Thus, there may be a need to provide an improved concept for touch control of a display arranged behind a cover glass.

## Summary

The arrangement of a display behind a cover glass prevents a user from directly touching the display. Thus, the display may be controlled by the cover glass, which provides an active area to control the display. If a spectating angle of the user or an orientation of the display relative to the cover glass changes, the active area of the cover may need to be adapted.

It is therefore a finding that a touch control of a display arranged behind a cover glass can be improved by determining an active area of the cover glass. Thus, the active area can be adjusted, e.g., to an orientation of the display relative to the cover glass and/or to a spectating angle of the user.

Embodiments provide a control unit for improving a user touch control of a display arranged behind a cover glass. The control unit comprises one or more interfaces configured to communicate with at least one position sensor and processing circuitry configured to control the one or more interfaces. Further, the processing circuitry is configured to obtain information about a relative position of the display to the cover glass, received from a position sensor, and to determine an active area of the cover glass for touch control of the display based on the relative position of the display for improving the user touch control. Further, the processing circuitry is configured to determine a correction parameter based on a relative position of the display, to obtain information about a user's touch gesture on the active area and to determine an intended user's touch gesture based on the information about the user's touch gesture and the correction parameter. Thus, an active area for a user's touch gesture can be determined and a user's gesture can be interpreted in dependence of the active area and a correction parameter can be determined to ease a calculation of an intended user's touch gesture.

In an example, the processing circuitry may be further configured to determine a feedback area on the cover glass, indicating the active area. Thus, the processing circuitry can provide information about the feedback area of the active area, e.g., to provide a user feedback about the active area.

Examples provide an in-vehicle infotainment system as described above, wherein the display is mounted movable with respect to the cover glass, and the control unit further comprising a position sensor to determine a relative position of the display to the cover glass.

In an example, the cover glass may comprise a vibration component and wherein the vibration component is used to provide a user feedback about the active area .Thus, the user can be informed in an improved way about an active area.

In an example, the in-vehicle infotainment system may further comprise an eye-tracking sensor configured to determine a user's spectating angle and wherein the control unit is further configured to obtain information about a desired user's display orientation based on the eye-tracking sensor and to adjust a display orientation to the desired user's display orientation. Thus, the relative position of the display and consequently the active area can be adjusted to a desired user's display orientation.

In an example, the control unit may be further configured to determine information about a high-pressure touch on the cover glass to and to determine the desired user's display orientation based on the determined information. Thus, the relative position of the display and consequently the active area can be adjusted to a desired user's display orientation.

In an example, the in-vehicle infotainment system may further comprise a lens to adjust a user's perception of the display. Thus, e.g., a tilt angle of the display can be corrected without a need to change the active area.

Examples relate to a method for improving a user touch control of a display arranged behind a cover glass comprising receiving information about a relative position of the display to the cover glass and determining an active area of the cover glass for touch control of the display based on the relative position of the display for improving the user touch control.

Examples further relate to a computer program having a program code for performing the method described above, when the computer program is executed on a computer, a processor, or a programmable hardware component.

**Brief description of the Figures**

Some examples of apparatuses and/or methods will be described in the following by way of example only, and with reference to the accompanying figures, in which

Fig. 1 shows a block diagram of an example of a control unit;

Fig. 2 shows an example of a user's touch gesture on a display and a corresponding (mapped) movement on the display;

Fig. 3 shows an example of an in-vehicle infotainment system; and

Fig. 4 shows an example of a method.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

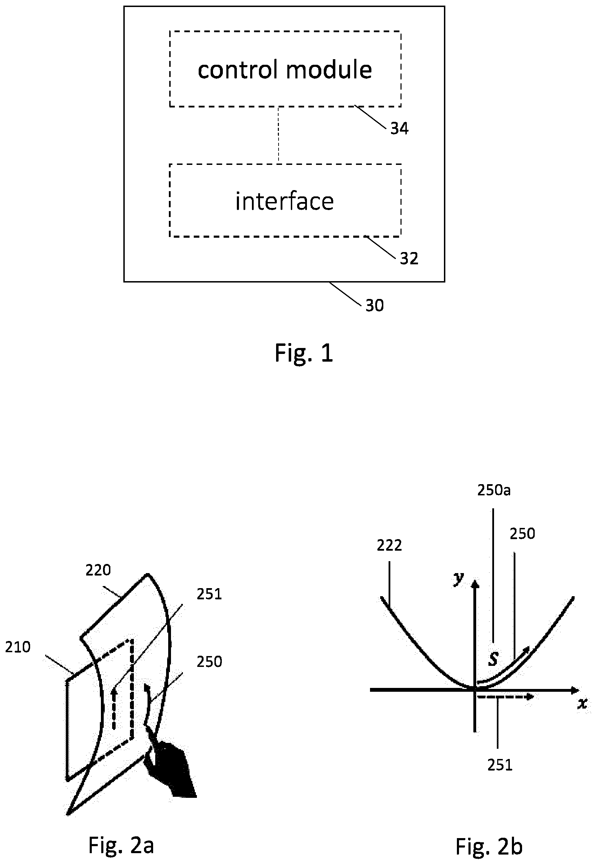

Fig. 1 shows a block diagram of an example of a control unit 30. The control unit 30 comprises one or more interfaces 32 configured to communicate with at least one position sensor and a processing circuitry 34 configured to control the one or more interfaces 32. Further, the processing circuitry 34 is configured to obtain information about a relative position of the display to the cover glass and to determine an active area of the cover glass for touch control of the display based on the relative position of the display for improving the user touch control.

The display is movable mounted with respect to the cover glass. For example, an orientation of the display can be changed and thus a relative position of the display to the cover glass can be changed. The display can be rotated in at least one dimension (1D). For example, the display can be rotated in two dimensions (2D), such that the display may have 2D degree of freedom. For example, a first tilt angle of the display may be up and down (e.g., to adjust an orientation of the display according to a tilting angle of a housing structure, e.g. a seat, a dashboard, etc., in which the display is arranged) and a second tilt angle of the display may be left and right (e.g., to adjust an orientation of the display to a position of a user in front of the display, e.g., the user can show to the person next to him something on the display). Consequently, by the 2D degree of freedom also diagonally rotation of the display as a combination of the first tilt angle and the second angle are possible. Thus, the display orientation can be adjusted to improve a user experience, e.g., can be adjusted to a position/spectating angle of the user. A maximum first/second tilt angle may depend on an aperture size of the cover glass, a display size, a distance between the display and the cover glass, a distance between the display and other fixed structures, e.g., a backrest of a seat, dashboard structure, etc. Optionally or alternatively, the display can be rotated in three dimensions (3D). For example, the display may comprise a first tilt angle and a second tilt angle as described above and a third tilt angle. The third tilt angle can be used to rotate the display around a center of the display, such that the display can be used in portrait or landscape mode (e.g., if the display is a 16:9 display). Thus, the display orientation can be adjusted to a use case.

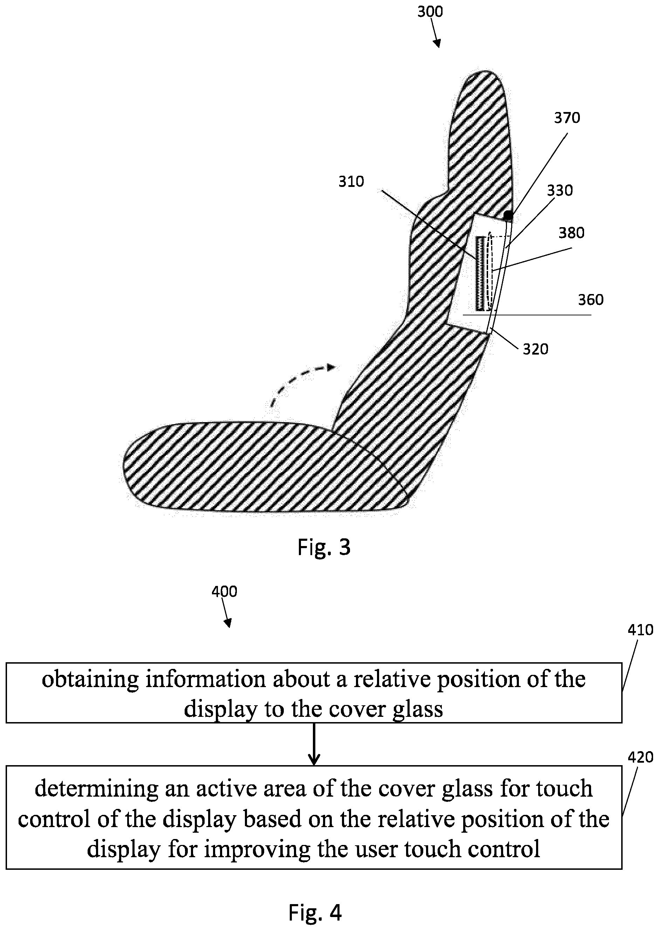

The information about a relative position of the display to the cover glass is received from a position sensor, which measures a value correlated to the relative position of the display. For example, the display may be tilted around the first tilt angle if a structure in which the display is housed is tilted too, e.g., the display is arranged in a seat and if the seat is tilted by a first angle the display is tilted in opposite direction by the same angle or a scaling factor of the first angle. Thus, the relative position of the display can be determined by receiving information about a tilting angle of a structure housing the display. Additionally, the information about the relative position is determined by use of a position sensor, which may be configured to directly measure an orientation of the display. The position sensor is comprised by the control unit and/or an in-vehicle infotainment system (e.g., as described with reference to Fig. 3).

Since the relative position of the display changes an active area of the cover glass for touch control of the display may also change. For example, the active area is a projection of the display area on the cover glass with respect to a spectating angle of a user. Accordingly, the active area may depend on the relative position of the display and thus it may be necessary to determine the active area based on the relative position. Optionally, it may be necessary to adjust the active area on a shape of the cover glass, e.g., on a flat cover glass, a curved cover glass etc. Optionally, the active area may be adjusted in dependence of a (multimedia) content shown on the display area. For example, the multimedia content may only occupy a part of the display area, e.g., a center region, and thus the active area may be adjusted to occupied display area.

Accordingly, the touch coordinates received on the cover glass may have to be actively corrected, or otherwise, a user's touch gestures may be mapped to wrong unexpected locations on the display. This way, an improved user experience can be achieved.

For example, the determined active area allows a user to perform a touch gesture on the active area which results in a corresponding movement/touch gesture on the display. Thus, the user touch control can be improved since the user may perform on the cover glass a gesture corresponding to the projection of the display on the cover glass.

For example, the active area may further depend on a multimedia content. The multimedia content may not use a total display size, such that the multimedia content runs only on a part of the display. Consequently, the active area may be adjusted to the multimedia content, e.g., to a part of the display used to display the multimedia content.

By determining the active area the control unit 30 can process a touch gesture, e.g., received from an interface of the cover glass, accordingly to the active area on the cover glass. For example, the control unit 30 may determine an intended movement on the display, e.g., by generating a corresponding mapped movement on the display as described with reference to Fig. 2.

Further, the control unit 30 can transmit information about the active area e.g., to the interface of the cover glass to inform a control circuitry of the cover glass about the active area, such that the control circuitry can provide feedback to a user about the active area (e.g., as described with reference to Fig. 2 and Fig. 3).

As shown in Fig. 1 the respective one or more interfaces 32 are coupled to the respective processing circuitry 34 at the control unit 30. In embodiments the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the control unit 30 may comprise a memory and at least one processor 34 operably coupled to the memory and configured to perform the below mentioned method.

In examples the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above or below. The example shown in Fig. 1 may comprise one or more optional additional features corresponding to one or more aspects mentioned in connection with the proposed concept or one or more examples described below (e.g., Fig. 2 - 4).

Fig. 2 shows an example of a user's touch gesture 250 on a cover glass 220 and a corresponding (mapped) movement 251 on the display. Fig. 2a show an example of a touch gesture 250 on the cover glass and a corresponding (intended) movement 251 on the display. Fig. 2b shows an example of a calculation of a correction parameter for a curved cover glass 222.

In an embodiment, the processing circuitry is further configured to determine a correction parameter based on the relative position of the display 210. Further, the processing circuitry is configured to obtain information about a user's touch gesture 250 on the active area (of the cover glass 220) and to determine an intended user's touch gesture 251 (also referred as corresponding mapped movement 251 on the display) based on the information about the user's touch gesture 250 and the correction parameter. Additionally, the correction parameter may further depend on a geometry of the cover glass. For example, the processing circuitry may determine the correction parameter based on the relative position of the display 210 and the geometry of the cover glass.

To determine the correction parameter the processing circuitry may use the determined active area derived from the relative position of the display 210, e.g., from a tilt angle (e.g., a tilt angle difference between the display 210 and a housing seat or housing dashboard), and a curvature design of the cover glass 220 (which can be represented in a mathematical equation). For example, the determination of the correction parameter may only depend on the active area and the curved cover glass 222.

This way new coordinates mapping the touch gesture 250 on the cover glass to a corresponding movement 251 on the display can be generated. Using these new coordinates the touch gestures 250 of the user can be seamless and correctly mapped to a movement 251 on the display. The determination of the correction parameter can be performed for different cover glasses 220, taken into account the different curvature designs of the cover glasses 220, e.g., flat cover glass, curved cover glass 222, etc.

For example, the correction parameter to map the touch gesture 250 from the cover glass to a movement 251 on the display beneath can be calculated for, but not limited to, an in one direction curved cover glass 220 as follows (this calculation but can be performed for every geometry of the cover glass 220).

The curvature design of the cover glass 220 for a curved cover glass 222 may be described by the equation $y = x^2$, where x is a value for the intended movement on the display.

This leads for the distance S 250a moved on the cover glass to

$$\frac{dS}{dx} = \sqrt{1 + \left(\frac{dy}{dx}\right)^2},$$

$$\int_0^S dS = \int_0^x \sqrt{1 + 4x^2}\, dx.$$

This leads to a relation between the distance S 250a moved on the cover glass and the intended corresponding mapped movement 251 on the display

$$S = \frac{x}{2}\sqrt{1 + 4x^2} + \frac{1}{4}\sinh^{-1}(2x).$$

For those skilled in the art it is obvious that the equation has be adapted accordingly once an orientation of the display 210 has changed.

Alternatively, to determine the correction parameter the processing circuitry may use a look-up table. For example, the look-up table can be created, calculated or generated once during calibration mapping all the different alternative positions. Thus, a determination of the correction parameter can be eased.

In an example, the processing circuitry may be further configured to determine a feedback area on the cover glass 220, indicating the active area. As the active area on the cover glass 220 may change with an orientation of the display 210 (a different relative position of the position) a user can be informed by the feedback area about an active area. For example, the feedback area may surround the active area or may be arranged on the edges of the active area. The control unit may inform a control circuitry e.g., of an in-vehicle infotainment system or cover glass 220 about the feedback area. Thus, the feedback area can be used to provide a user feedback.

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 4).

Fig. 3 shows an example of an in-vehicle infotainment system 300. The in-vehicle infotainment system 300 comprises a control unit as described with reference to Fig. 1 (and Fig. 2) (not shown), a display 310, a cover glass 320 and a position sensor (not shown) to determine a relative position of the display to the cover glass. The position sensor determines a relative position of the display 310 and transmits this information to the control unit. The control unit may determine an active area 330 based on the relative position of the display 310 (and the curvature design of the cover glass 320). The in-vehicle infotainment system 300 can be integrated into a seat as shown in Fig. 3 and/or in other structures of the vehicle, e.g., in a dashboard, e.g., for a co-driver infotainment/entertainment system.

For example, the cover glass 320 can be larger than the display 310 (as shown in Fig. 3) to enable a user to see the full display 310 even when the display 310 is tilted and/or to enable running multimedia content of different sizes (e.g., aspect ratios 16:9, 21:9, etc.).

In an example, the cover glass 320 may comprise a vibration component and wherein the vibration component is used to provide a user feedback about the active area. The vibration component can be utilized to give haptic feedback to the user, e.g., about an edge of the active area 330. For example, the feedback area determined by the control unit can be received by a control circuitry of the cover glass 320 and can be used to provide haptic feedback. For example, the control circuitry of the cover glass (or a control unit of the in-vehicle infotainment system) may use the feedback area to provide haptic feedback to the user if a user's touch gesture reaches the feedback area, e.g., an edge of the active area. For example, the feedback area may be located around/along the edges of the active area to inform a user about a maximum dimension of the active area or the feedback area may match the active area, such that a user may receive a feedback as long as the user touches the active area (and no feedback if the user touches besides the active area).

Optionally or alternatively an illumination of the cover glass 320 may be changed if the user touches the cover glass 320 outside the active area 330. Thus, feedback can be given by decreasing the brightness of the display 310, e.g., by use of the control unit as described with reference to Fig. 1. For example, the control may receive information about a user's touch gesture besides the active area and may inform the display 310 to decrease a brightness.

As described above the active area 330 may change in dependence of the relative position of the display 310, e.g., depending on a tilt angle. Further, as described the cover glass 320 can be larger than the display 310, thus a user can in fact touch on a larger area than the active area 330 itself. Therefore, the (haptic, visual, etc.) feedback can ensure an improved user experience since the user gets feedback on the active area 330 or an edge of the active area 330. This way, the user can receive a feedback signal to adjust his touch gesture accordingly. Optionally, the feedback can also be used when the touch gesture is at or beyond a border of an active multimedia content (e.g., the multimedia content may be smaller than the display 310 itself (e.g. during mirroring in portrait mode)), e.g., the feedback area may be the whole cover glass except of the active area for controlling the multimedia content. Thus, the user can receive a (haptic, visual, etc.) feedback when his touch gesture reaches or extends beyond the border of an active multimedia content region.

In an example, the cover glass 320 may be blacked out, such that only a bright part of the display 310 is visible through the cover glass 320. This way, if the display 310 is larger than the multimedia content running on it the user only recognizes the bright parts (e.g., parts on which the multimedia content runs) of the display 310. Thus, user's irritation can be reduced/omitted, which may increase a user's experience, e.g., using a smartphone screen in a portrait mode.

Additionally or alternatively, a cavity 360 in which the display 310 is integrated can comprise a similar color as the display 310. This way, the user may only recognize the display 310 if the display 310 is used, e.g. to run multimedia content and none-bright parts of the display 310 may be not recognized by the user increasing a user experience.

Thus, an appeal look may be achieved when the multimedia content is smaller than the display 310 because the user doesn't know the actual size of the display 310, which also may help the user to focus solely on the multimedia content and not getting distracted by a detail inside the cavity 360.

In an example, the in-vehicle infotainment system 300 may further comprise an eye-tracking sensor 370 (e.g., a camera) configured to determine a user's spectating angle and wherein the control unit is further configured to obtain information about a desired user's display orientation based on the eye-tracking sensor 370 and to adjust a display orientation to the desired user's display orientation. This way, a desired user's display orientation can be determined, e.g., the display is rotated in a way that it is perpendicular to a spectating angle of the user. Using this information the display orientation can be automatically adjusted, which may increase a user experience.

For example this automatically adjustment can be performed as an initial calibration to a (new) user and/or when the seat is tilted. Additionally the automatically adjustment can be performed periodically to correct a user's head movement.

For example, the eye-tracking sensor 370 can be also used to identify the relative position between the display and the user's eyes (e.g., for a child or an adult), e.g., to perform a tilt calibration to different users, since users in the vehicle may have different heights e.g., a child is shorter than an adult. Using the eye-tracking sensor 370 the display 310 can be automatically orientated with respect to a height of the user and/or a gaze (e.g., a direction at which the user is looking). Thus, the control unit can use this information to automatically calibrate the tilt of the display 310. The location of the eye-tracking sensor 370 in Fig. 3 at the back of a front seat is just as an example. However, the camera for eye-tracking 370 can be attached anywhere inside the vehicle, e.g., to the display 310, to the seat, to the dashboard, to a roof, etc.

In an example, the control unit may be further configured to determine information about a high-pressure touch on the cover glass 320 and to determine the desired user's display orientation based on the determined information. For example, the control unit may determine a special touch gesture (e.g., a stronger pressure touch - known as 3D touch) on the cover glass 320 (especially on the active area 330) to change the tilt angle of the display 310. The user may perform a 3D touch on a position besides a center of the active area 330 (the projection of the display 310 on the cover glass 320). The control unit may receive this 3D touch gesture and may tilt the display 310 in the same direction as the 3D touch gesture is shifted to the center of the active area 330. For example, if the user performs a 3D touch on a right side of the center of the active area 330 the control unit may rotate the display 310 to the right. Optionally, a tilting speed/angle may depend on a distance of the 3D touch gesture to the center of the active area 330, e.g., for a larger distance the display 330 may be rotated/tilted by a larger angle. Optionally, a tiling speed/angle may depend on a time of the 3D touch gesture. For example, the tilting speed may increase with an increasing time of the 3D touch gesture. Optionally, a tilting speed/angle may depend on a pressure applied during the 3D touch. For example, a pressure used for a first 3D touch gesture may be assigned to a first tilting angle of the display and a pressure used for a second 3D touch gesture may be assigned to a second tilting angle. This way, a user may adjust the tilting angle of the display by varying a pressure of the 3D touch gesture.

In an example, the in-vehicle infotainment system 300 may further comprise a lens 380 to adjust a user's perception of the display. For example, the lens 380 may be movable mounted like the display 310, e.g., the lens 380 may be tilted by the same angle as the display 380.

For example, the lens 380 may be a magnifying glass, such that a user experience may be increased due to an increased display size perception. Alternatively, the cover glass 320 may be designed itself as a magnifying glass.

For example, the lens 380 may be a focus tunable lenses, such like mechanical shifted Alvarez, deformable Liquid lens, or electronically switched liquid crystal lens. Thus, a user experiences can be increased by use of a magnifying lens.

Alternatively, the lens 380 can be used to compensate for a tilt of a display. For example, utilizing a tilt-shift lens that straightens the image to the user may reduce the need to rotate the display 310, e.g. using the parallax or Scheimpflug principle. Thus, a size of the cavity 360 can be reduced.

For example, in-vehicle infotainment system 300 may be integrated into a vehicle, which may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

More details and aspects are mentioned in connection with the embodiments described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4).

Fig. 4 shows an example of a method 400. The method 400 for improving a user touch control of a display arranged behind a cover glass comprises obtaining 410 information about a relative position of the display to the cover glass. Further, the method 400 comprises determining 420 an active area of the cover glass for touch control of the display based on the relative position of the display for improving the user touch control. For example, obtaining 410 and determining 420 may be performed by a control unit as described with reference to Fig. 1

More details and aspects are mentioned in connection with the embodiments described above. The example shown in Fig. 4 may comprise one or more optional additional features corresponding to one or more aspects mentioned in connection with the proposed concept or one or more examples described above (e.g., Fig. 1 - 3).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components.

Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example.

## Claims

1. A control unit (30) for improving a user touch control of a display arranged behind a cover glass (220; 320), comprising:

> one or more interfaces (32) configured to communicate with at least one position sensor (370); and
> processing circuitry (34) configured to control the one or more interfaces (34) and to:
>
>> receive, from a position sensor, information about a relative position of the display (210; 310) to the cover glass (220; 320);
>> determine an active area (330) of the cover glass (220; 320) for touch control of the display (210; 310) based on the relative position of the display (210; 310) for improving the user touch control;
>> determine a correction parameter based on the relative position of the display (210; 310);
>> obtain information about a user's touch gesture (250) on the active area (330); and
>> determine an intended user's touch gesture (251) based on the information about the user's touch gesture (250) and the correction parameter.

2. The control unit (30) according to claim 1, wherein the processing circuitry (34) is further configured to determine a feedback area on the cover glass (220; 320), indicating the active area (330).

3. In-vehicle infotainment system (300), comprising the control unit of claim 1, wherein the display (210; 310) is mounted movable with respect to the cover glass (220; 320); and the control unit further comprising: a position sensor to determine a relative position of the display to the cover glass (220; 320).

4. The in-vehicle infotainment system (300) according to claim 3, wherein

> the cover glass (220; 320) comprises a vibration component; and wherein
> the vibration component is used to provide a user feedback about the active area (330).

5. The in-vehicle infotainment system (300) according to claim 3 or 4, further comprising an eye-tracking sensor (370) configured to determine a user's spectating angle; and wherein the control unit is further configured to:

> obtain information about a desired user's display orientation based on the eye-tracking sensor (370); and
> adjust a display orientation to the desired user's display orientation.

**6.** The in-vehicle infotainment system (300) according to any of the claims 3 - 5, wherein

the control unit is further configured to determine information about a 3-dimensional touch gesture on the cover glass (220; 320); and determine the desired user's display orientation based on the determined information.

**7.** The in-vehicle infotainment system (300) according to any of the claims 3 - 6, further comprising a lens (370) to adjust a user's perception of the display (210; 310).

**8.** A method (400) for improving a user touch control of a display arranged behind a cover glass, comprising

receiving (410), from a position sensor, information about a relative position of the display to the cover glass; and determining (420) an active area of the cover glass for touch control of the display based on the relative position of the display for improving the user touch control.

**9.** A computer program having a program code for performing the method (400) according to claim 8, when the computer program is executed on a computer, a processor, or a programmable hardware component.

**Patentansprüche**

**1.** Steuereinheit (30) zum Verbessern einer Benutzerberührungssteuerung einer Anzeige, die hinter einem Abdeckglas (220; 320) angeordnet ist, die Folgendes umfasst:

eine oder mehrere Schnittstellen (32), die dazu ausgelegt sind, mit mindestens einem Positionssensor (370) zu kommunizieren; und eine Verarbeitungsschaltung (34), die dazu ausgelegt ist, die eine oder die mehreren Schnittstellen (34) zu steuern, sowie zu Folgendem:

Empfangen von Informationen über eine Position der Anzeige (210; 310) relativ zum Abdeckglas (220; 320) von einem Positionssensor; Bestimmen eines aktiven Bereichs (330) des Abdeckglases (220; 320) für eine Berührungssteuerung der Anzeige (210; 310) auf Basis der relativen Position der Anzeige (210; 310) zum Verbessern der Benutzerberührungssteuerung; Bestimmen eines Korrekturparameters auf Basis der relativen Position der Anzeige (210; 310); Erhalten von Informationen über eine Berührungsgeste (250) eines Benutzers auf dem aktiven Bereich (330) und Bestimmen einer beabsichtigten Berührungsgeste (251) eines Benutzers auf Basis der Informationen über die Berührungsgeste (250) des Benutzers und des Korrekturparameters.

**2.** Steuereinheit (30) nach Anspruch 1, wobei die Verarbeitungsschaltung (34) ferner dazu ausgelegt ist, einen Rückmeldungsbereich auf dem Abdeckglas (220; 320) zu bestimmen, der den aktiven Bereich (330) anzeigt.

**3.** Fahrzeuginfotainmentsystem (300), das die Steuereinheit von Anspruch 1 umfasst, wobei die Anzeige (210; 310) mit Bezug auf das Abdeckglas (220; 320) bewegbar montiert ist; und wobei die Steuereinheit ferner Folgendes umfasst: einen Positionssensor zum Bestimmen einer Position der Anzeige relativ zum Abdeckglas (220; 320).

**4.** Fahrzeuginfotainmentsystem (300) nach Anspruch 3, wobei

das Abdeckglas (220; 320) eine Vibrationskomponente umfasst und wobei die Vibrationskomponente verwendet wird, um eine Benutzerrückmeldung über den aktiven Bereich (330) bereitzustellen.

**5.** Fahrzeuginfotainmentsystem (300) nach Anspruch 3 oder 4, das ferner einen Augenverfolgungssensor (370) umfasst, der dazu ausgelegt ist, einen Blickwinkel eines Benutzers zu bestimmen; und wobei die Steuereinheit ferner zu Folgendem ausgelegt ist:

Erhalten von Informationen über eine gewünschte Anzeigenausrichtung eines Benutzers auf Basis des Augenverfolgungssensors (370) und Anpassen einer Anzeigenausrichtung an die gewünschte Anzeigenausrichtung des Benutzers.

**6.** Fahrzeuginfotainmentsystem (300) nach einem der Ansprüche 3-5, wobei die Steuereinheit ferner dazu ausgelegt ist, Informationen über eine 3-dimensionale Berührungsgeste auf dem Abdeckglas (220; 320) zu bestimmen; und die gewünschte Anzeigenausrichtung des Benutzers auf Basis der bestimmten Informationen zu bestimmen.

**7.** Fahrzeuginfotainmentsystem (300) nach einem der Ansprüche 3-6, das ferner Folgendes umfasst

eine Linse (370) zum Anpassen einer Wahrnehmung der Anzeige (210; 310) durch den Benutzer.

8. Verfahren (400) zum Verbessern einer Benutzerberührungssteuerung einer Anzeige, die hinter einem Abdeckglas angeordnet ist, das Folgendes umfasst Empfangen (410) von Informationen über eine Position der Anzeige relativ zum Abdeckglas von einem Positionssensor und

Bestimmen (420) eines aktiven Bereichs des Abdeckglases für eine Berührungssteuerung der Anzeige auf Basis der relativen Position der Anzeige zum Verbessern der Benutzerberührungssteuerung.

9. Computerprogramm, das einen Programmcode zum Durchführen des Verfahrens (400) nach Anspruch 8, wenn das Computerprogramm auf einem Computer, einem Prozessor oder einer programmierbaren Hardwarekomponente ausgeführt wird, aufweist.

## Revendications

1. Unité de commande (30) permettant d'améliorer une commande tactile d'utilisateur d'une unité d'affichage agencée derrière une vitre de protection (220 ; 320), l'unité de commande comprenant :

une ou plusieurs interfaces (32) configurées pour communiquer avec au moins un capteur de position (370) ; et
une circuiterie de traitement (34) configurée pour commander la ou les interfaces (34) et pour :

recevoir, en provenance d'un capteur de position, des informations concernant une position relative de l'unité d'affichage (210 ; 310) par rapport à la vitre de protection (220 ; 320) ;
déterminer une zone active (330) de la vitre de protection (220 ; 320) pour une commande tactile de l'unité d'affichage (210 ; 310) sur la base de la position relative de l'unité d'affichage (210 ; 310) afin d'améliorer la commande tactile d'utilisateur ;
déterminer un paramètre de correction sur la base de la position relative de l'unité d'affichage (210 ; 310) ;
obtenir des informations concernant un geste tactile (250) de l'utilisateur sur la zone active (330) ; et
déterminer un geste tactile prévu (251) de l'utilisateur sur la base des informations concernant le geste tactile (250) de l'utilisateur et du paramètre de correction.

2. Unité de commande (30) selon la revendication 1, dans laquelle :
la circuiterie de traitement (34) est en outre configurée pour déterminer une zone de retour sur la vitre de protection (220 ; 320), indiquant la zone active (330).

3. Système d'infodivertissement embarqué (300), comprenant l'unité de commande selon la revendication 1, l'unité d'affichage (210 ; 310) étant montée mobile par rapport à la vitre de protection (220 ; 320) ; et l'unité de commande comprenant en outre :
un capteur de position pour déterminer une position relative de l'unité d'affichage par rapport à la vitre de protection (220 ; 320).

4. Système d'infodivertissement embarqué (300) selon la revendication 3, dans lequel :

la vitre de protection (220 ; 320) comprend un composant vibratoire ; et
le composant vibratoire est utilisé pour fournir un retour d'utilisateur concernant la zone active (330).

5. Système d'infodivertissement embarqué (300) selon la revendication 3 ou 4, comprenant en outre un capteur de suivi des yeux (370) configuré pour déterminer un angle de vision de l'utilisateur ; et l'unité de commande étant en outre configurée pour :

obtenir des informations concernant une orientation d'unité d'affichage souhaitée par l'utilisateur sur la base du capteur de suivi des yeux (370) ; et
régler une orientation d'unité d'affichage selon l'orientation d'unité d'affichage souhaitée par l'utilisateur.

6. Système d'infodivertissement embarqué (300) selon l'une quelconque des revendications 3 à 5, dans lequel l'unité de commande est en outre configurée pour déterminer des informations concernant un geste tactile tridimensionnel sur la vitre de protection (220 ; 320) ; et
déterminer l'orientation d'unité d'affichage souhaitée par l'utilisateur sur la base des informations déterminées.

7. Système d'infodivertissement embarqué (300) selon l'une quelconque des revendications 3 à 6, comprenant en outre :
une lentille (370) pour régler une perception de l'unité d'affichage (210 ; 310) par l'utilisateur.

8. Procédé (400) permettant d'améliorer une commande tactile d'utilisateur d'une unité d'affichage agencée derrière une vitre de protection, le procédé comprenant les étapes consistant à :

recevoir (410), en provenance d'un capteur de position, des informations concernant une position relative de l'unité d'affichage par rapport à la vitre de protection ; et
déterminer (420) une zone active de la vitre de protection pour une commande tactile de l'unité d'affichage sur la base de la position relative de l'unité d'affichage afin d'améliorer la commande tactile d'utilisateur.

9. Programme informatique comprenant un code de programme permettant de réaliser le procédé (400) selon la revendication 8 lorsque le programme informatique est exécuté sur un ordinateur, un processeur ou un composant matériel programmable.

control module

34

interface

32

30

**Fig. 1**

220

251

210

250

**Fig. 2a**

250a

250

222

251

*y*

*s*

*x*

**Fig. 2b**

300

370

310

330

380

360

320

Fig. 3

400

410

obtaining information about a relative position of the
display to the cover glass

420

determining an active area of the cover glass for touch
control of the display based on the relative position of the
display for improving the user touch control

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3663897 A1
- US 2017277332 A1
- JP S647126 A
- US 2014292665 A1